(19) **Europäisches Patentamt / European Patent Office / Office européen des brevets**

(11) **EP 4 572 274 A1**

(12) **EUROPEAN PATENT APPLICATION**
published in accordance with Art. 153(4) EPC

(43) Date of publication:
**18.06.2025 Bulletin 2025/25**

(21) Application number: **23853032.3**

(22) Date of filing: **10.08.2023**

(51) International Patent Classification (IPC):
**H04L 27/26** (2006.01)   **H04W 74/00** (2009.01)
**H04L 1/00** (2006.01)   **H04L 1/08** (2006.01)
**H04W 72/04** (2023.01)   **H04W 88/02** (2009.01)

(52) Cooperative Patent Classification (CPC):
**H04L 1/00; H04L 1/08; H04L 27/26; H04W 72/04;
H04W 74/00; H04W 88/02**

(86) International application number:
**PCT/KR2023/011845**

(87) International publication number:
**WO 2024/035165 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100875
03.11.2022 US 202263422408 P**

(71) Applicant: **LG Electronics Inc.
Yeongdeungpo-gu
Seoul 07336 (KR)**

(72) Inventors:
• **AHN, Seungjin**
  Seoul 06772 (KR)
• **KIM, Seonwook**
  Seoul 06772 (KR)
• **KIM, Jaehyung**
  Seoul 06772 (KR)
• **YANG, Suckchel**
  Seoul 06772 (KR)
• **LEE, Sunghoon**
  Seoul 06772 (KR)

(74) Representative: **Mooser, Sebastian Thomas
Wuesthoff & Wuesthoff
Patentanwälte und Rechtsanwalt PartG mbB
Schweigerstraße 2
81541 München (DE)**

(54) **DEVICE AND METHOD FOR PERFORMING RANDOM ACCESS PROCEDURE IN WIRELESS COMMUNICATION SYSTEM**

(57) The present disclosure relates to performing a random access procedure in a wireless communication system, and a method for operating a terminal may include receiving system information, obtaining information related to a random access channel (RACH) based on the system information, identifying a type of an available RACH preamble based on a transmission bandwidth of the terminal, selecting a RACH preamble based on the information related to the RACH and the type, and transmitting the selected RACH preamble through the RACH.

FIG. 13

## Description

### Technical Field

The present disclosure relates to a wireless communication system, and particularly, to an apparatus and method for performing a random access procedure in a wireless communication system.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide an apparatus and method for performing a random access procedure in a wireless communication system.

The present disclosure may provide an apparatus and method for transmitting a random access channel (RACH) preamble in a wireless communication system.

The present disclosure may provide an apparatus and method for obtaining information related to a RACH based on system information in a wireless communication system.

The present disclosure may provide an apparatus and method for transmitting a RACH preamble based on a transmission bandwidth and a required bandwidth of a RACH signal in a wireless communication system.

The present disclosure may provide an apparatus and method for puncturing at least one sample in a RACH sequence with a designated length in a wireless communication system.

The present disclosure may provide an apparatus and method for leaving at least one resource element (RE) blank among REs within a transmission bandwidth and mapping a RACH preamble in a wireless communication system.

The present disclosure may provide an apparatus and method for determining locations where samples of RACH sequence are mapped within a transmission bandwidth in a wireless communication system.

The present disclosure may provide an apparatus and method for determining a length of a RACH sequence based on a transmission bandwidth in a wireless communication system.

The present disclosure may provide an apparatus and method for determining a new format of a RACH sequence based on a transmission bandwidth in a wireless communication system.

The present disclosure may provide an apparatus and method for restricting the use of some RACH sequences based on a transmission bandwidth in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for operating a terminal in a wireless communication system may include receiving system information, obtaining information related to a random access channel (RACH) based on the system information, identifying a type of an available RACH preamble based on a transmission bandwidth of the terminal, selecting a RACH preamble based on the information related to the RACH and the type, and transmitting the selected RACH preamble through the RACH.

As an example of the present disclosure, a method for operating a base station in a wireless communication system may include transmitting system information including information related to a random access channel (RACH) and receiving a RACH preamble from a terminal through the RACH. The RACH preamble may belong to a type of an available RACH preamble based on a transmission bandwidth of the terminal.

As an example of the present disclosure, a terminal in a wireless communication system may include a transceiver and a processor coupled with the transceiver. The processor may be configured to receive system information, to obtain information related to a random access channel (RACH) based on the system information, to identify a type of an available RACH preamble based on a transmission bandwidth of the terminal, to select a RACH preamble based on the information related to the RACH and the type, and to transmit the selected RACH preamble through the RACH.

As an example of the present disclosure, a base station in a wireless communication system may include a transceiver and a processor coupled with the transceiver. The processor may be configured to transmit system information including information related to a random access channel (RACH) and to receive a RACH preamble from a terminal through the RACH. The RACH preamble may belong to a type of an available RACH preamble based on a transmission bandwidth of the terminal.

As an example of the present disclosure, a communication device may include at least one processor and at least one computer memory coupled with the at least one processor and storing an instruction that instructs operations when executed by the at least one processor. The operations may include receiving system information, obtaining information related to a random access channel (RACH) based on the system information, identifying a type of an available RACH preamble based on a transmission bandwidth of the communication device, selecting a RACH preamble based on the information related to the RACH and the type, and transmitting the selected RACH preamble through the RACH.

As an example of the present disclosure, a non-transitory computer-readable medium storing at least one instruction may include the at least one instruction that is executable by a processor. The at least one instruction may control a device to receive system information, to obtain information related to a random access channel (RACH) based on the system information, to identify a type of an available RACH preamble based on a transmission bandwidth of the device, to select a RACH preamble based on the information related to the RACH and the type, and to transmit the selected RACH preamble through the RACH.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

**Advantageous Effects**

As is apparent from the above description, the embodiments of the present disclosure have the following effects.

According to the present disclosure, performance degradation may be minimized, while cell coverage is maintained in narrowband.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description** of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates a random access channel (RACH) preamble example based on a long sequence.

FIG. 9 illustrates a RACH preamble example based on a short sequence.

FIG. 10 illustrates an interference example of a short sequence.

FIG. 11 illustrates an example of a sequence, of which the center is aligned with a central RE.

FIG. 12 illustrates an example of a starting RB of a RACH sequence.

FIG. 13 illustrates an example of a procedure of transmitting a RACH preamble for random access in a wireless communication system according to an embodiment of the present disclosure.

FIG. 14 illustrates an example of a procedure of transmitting some or all of sequence samples of a RACH preamble in a wireless communication system according to an embodiment of the present disclosure.

FIG. 15 illustrates an example of a procedure of mapping some of sequence samples of a RACH preamble in a wireless communication system according to an embodiment of the present disclosure.

FIG. 16 illustrates an example of a procedure of aligning sequence samples of a RACH preamble in a transmission bandwidth in a wireless communication system according to an embodiment of the present disclosure.

FIG. 17 illustrates an example of a procedure of determining a length of sequence samples of a RACH preamble in a wireless communication system according to an embodiment of the present disclosure.

FIG. 18 illustrates an example of a procedure of repeatedly mapping sequence samples of a RACH preamble in a wireless communication system according to an embodiment of the present disclosure.

FIG. 19 illustrates an example of a procedure of determining a starting RB for mapping a RACH preamble in a wireless communication system according to an embodiment of the present disclosure.

FIG. 20 illustrates an example of a procedure of mapping sequence samples based on a use restriction for a RACH preamble in a wireless communication system according to an embodiment of the present disclosure.

FIG. 21 illustrates an example of a procedure of receiving a RACH preamble for random access in a wireless communication system according to an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

## Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

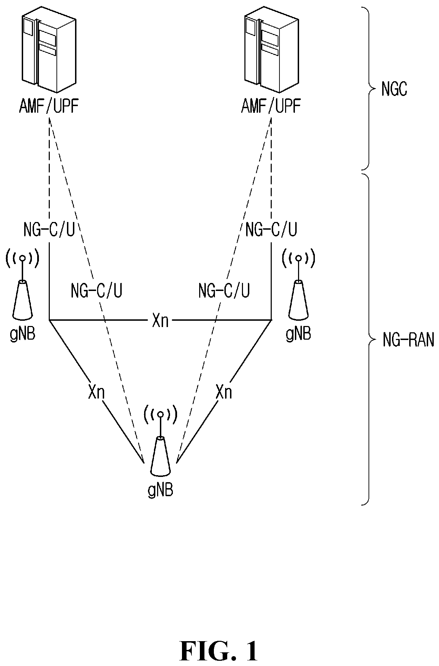

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

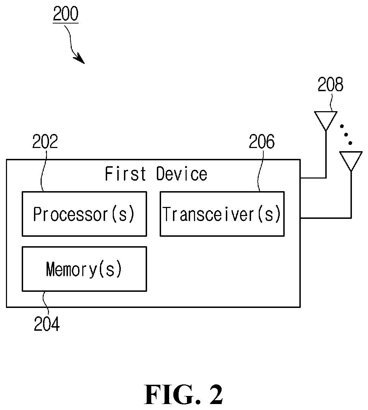

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

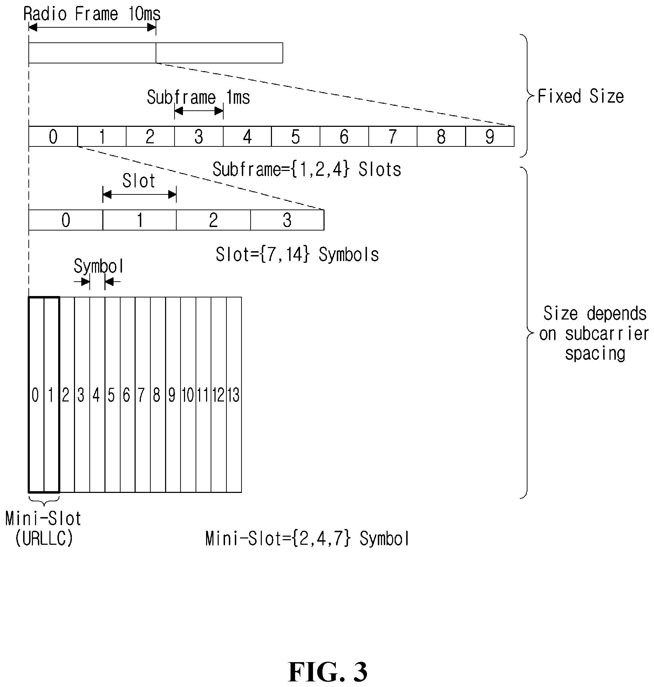

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$Hz and $N_f$ is 4096. Downlink and uplink transmission is configured (organized) with a radio frame having a duration of $Tf = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0, \cdots, N_{slot}^{subframe,\mu} - 1\}$ in a subframe and are numbered in an increasing order of $n_{s,f}^{\mu} \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

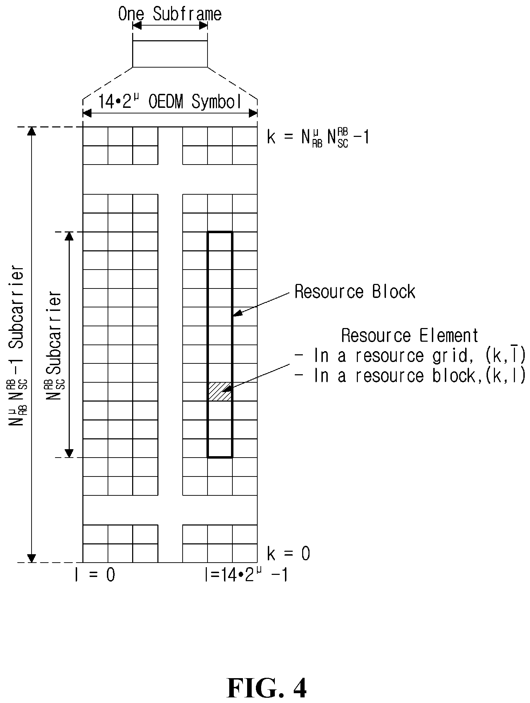

FIG. 4 exemplifies a resource grid in a wireless communication system to which the present disclosure may be applied.

Referring to FIG. 4, as an illustrative description, a resource grid is configured with $N_{RB}^\mu N_{SC}^{RB}$ subcarriers in a frequency domain, and one subframe is configured with $14 \cdot 2^\mu$ OFDM symbols, but the resource grid and the subframe are not limited thereto. In an NR system, a transmitted signal is described by one or more resource grids configured with $2^\mu N_{symb}^{(\mu)}$ OFDM symbols and $N_{RB}^\mu N_{SC}^{RB}$ subcarriers. Here, $N_{RB}^\mu \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here,

$k=0,\ldots,$ $N^{\mu}_{RB}N^{RB}_{SC}-1$ is an index in a frequency domain and $l'=0,\ldots,$ $2^{\mu}N^{(\mu)}_{symb}-1$ refers to a position of a symbol in a subframe. When referring to a resource element in a slot, an index pair (k, I) is used. Here, $l=0,\ldots,$ $2^{\mu}N^{(\mu)}_{symb}-1$. A resource element (k, I') for μ and an antenna port p corresponds to a complex value, $a^{(p,\mu)}_{k,f}$. When there is no risk of confusion or when a specific antenna port or numerology is not specified, indexes p and μ may be dropped, whereupon a complex value may be $a^{(p)}_{k,l'}$ or $a_{k,l'}$. In addition, a resource block (RB) is defined as $N^{RB}_{sc}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n^{\mu}_{CRB}$ and a resource element (k, 1) for a subcarrier spacing configuration μ in a frequency domain is given as in the following Equation 1.

[Equation 1]

$$n^{\mu}_{CRB}=\left\lfloor \frac{k}{N^{RB}_{sc}} \right\rfloor$$

In Equation 1, k is defined relatively to point A so that k=0 corresponds to a subcarrier centering around point A. Physical resource blocks are numbered from 0 to $N^{size,\mu}_{BWP,i}-1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n^{\mu}_{CRB}=n^{\mu}_{PRB}+N^{start,\mu}_{BWP,i}$$

$N^{start,\mu}_{BWP,i}$ is a common resource block that a BWP starts relatively to common resource block 0.

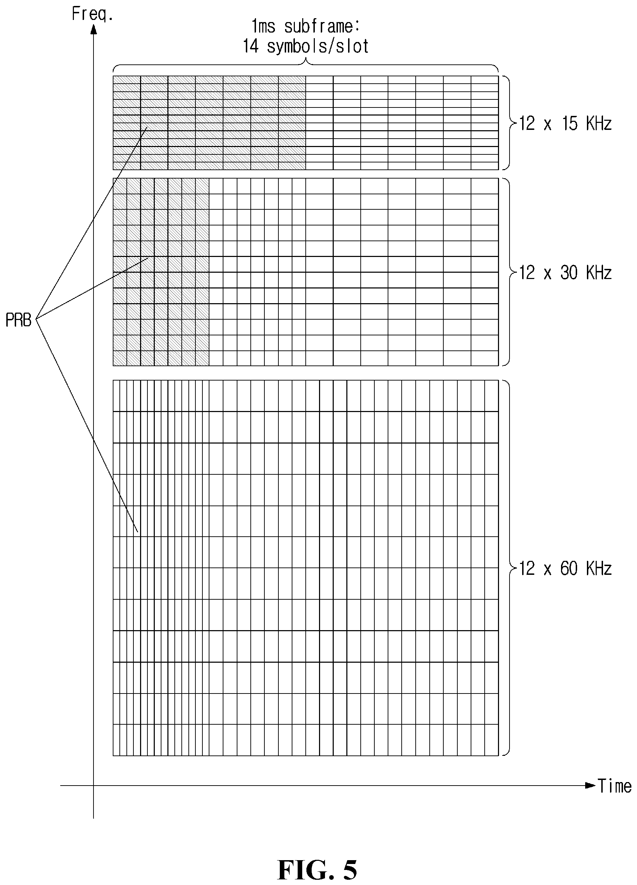

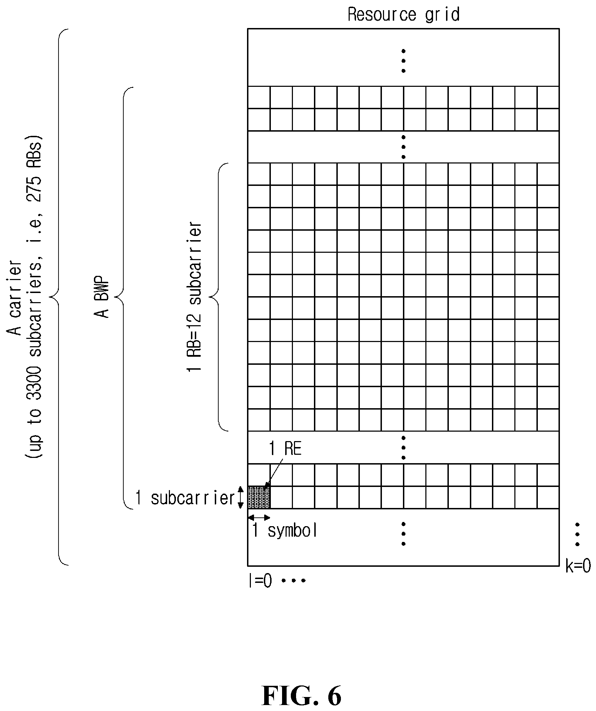

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

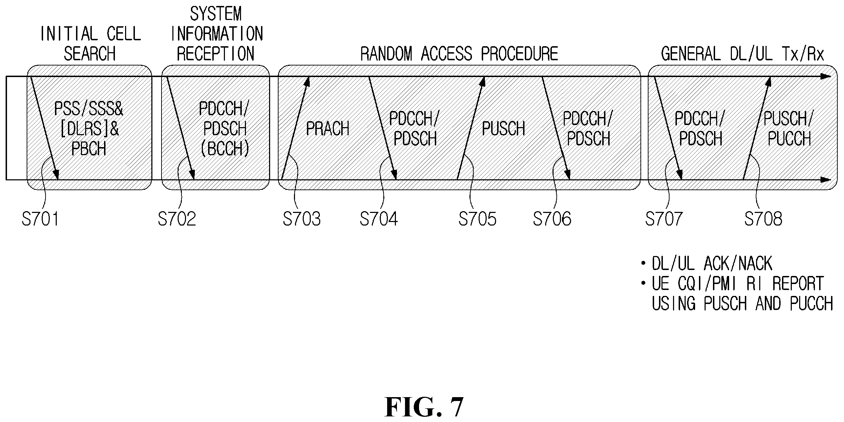

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

## Specific embodiments of the present disclosure

The present disclosure relates to a technology for performing a random access procedure in a wireless communication system. Specifically, the present disclosure relates to transmission of a RACH preamble in a wireless communication system, and particularly, to a technology for mapping a RACH preamble to a resource in an environment where a limited bandwidth is used.

5G NR provides a service mostly through main technologies such as Enhanced Mobile Boradband (eMBB), Ultra-Reliable and Low Latency Communications (URLLC) and Massive Internet of Things (mIoT). mIoT is a communication method that is optimized to reduce power consumption based on a small size and low power, unlike carrier
aggregation (CA) that requires high performance and maximum throughput speed transmission.

In 5G NR, there are three main technologies of URLLC, eMBB and mIoT, and hybrid-type technologies of the
three technologies may be provided. In 3GPP release 17, a new device type, which has target use cases of smart factory or
wearable devices and requires low power as well as a certain level of transfer rates, is referred to as a reduced performance
terminal, that is, a reduced capability (Redcap) UE. Herein, unlike previous types, a Redcap UE or a Redcap terminal uses
a narrow spectrum or a narrow bandwidth for a frequency resource. Depending on how narrower spectrum or bandwidth is
used, a predetermined frequency bandwidth for a specific channel or signal transmission may not be entirely used by a
Redcap terminal.

In the case of uplink, flexibility is supported to use only an available frequency band for most signals and
channels. However, in 5G NR, a bandwidth of a frequency resource of a RACH preamble is not flexibly defined but defined
in a fixed manner. When a subcarrier spacing (SCS) is 30 kHz, a frequency area occupied by a single resource element
(RE) is larger compared to when an SCS is 15 kHz, within a same frequency band. As a result, a significant portion of
frequency resources for a RACH preamble is not utilized.

A RACH preamble has a sequence form, and each of sequence samples is mapped to each RE in a frequency
area. Herein, if the frequency area becomes smaller, the number of available REs may also decrease. For example, if there
are 100 sequence samples of a PRACH preamble and there are 90 REs in a currently available frequency bandwidth, 90
sequency samples may be transmitted, but 10 sequence samples cannot be transmitted. As a previous general terminal
uses a frequency area of up to 100 MHz according to FR1, the number of available REs is larger than the number of PRACH
sequence samples, which causes no significant problem in transmission of a RACH preamble. However, a Redcap
terminal uses as small a frequency area as 3 MHz or 5 MHz, and the number of available REs is smaller than the number of
PRACH sequence samples, and thus there may occur an event in which a portion of the PRACH sequence samples cannot
be transmitted. In this case, a service coverage area of PRACH may decrease because of performance degradation. As a
result, during a RACH procedure, an occurrence probability of PRACH reception error in Message1 becomes higher.
Accordingly, it is important to find a solution to minimizing performance degradation by efficiently transmitting a RACH
preamble in a situation where puncturing is unavoidable with a small number of available REs. In the description below, BW
(bandwidth) may be understood as equivalent to BWP (bandwidth part).

Accordingly, the present disclosure provides a technology for transmitting a channel or signal (e.g., a preamble)
within an actual available bandwidth of a Redcap terminal, when a required bandwidth of the channel or signal is wider than
the given bandwidth of the Redcap terminal. In case a required bandwidth for the use of a specific signal or channel is wider
than an actual available bandwidth of a Redcap terminal, a portion of information is punctured or lost, which may result in
the problem of performance degradation. Therefore, the present disclosure will provide various methods for minimizing
performance degradation or enabling compensation.

Generally, PRACH is divided into a long sequence and a short sequence. The long sequence includes 839
sequence samples, and the short sequence includes 139 sequence samples. Accordingly, in a frequency band,
transmission of the long sequence requires 893 or more REs, and transmission of the short sequence requires 139 or
more REs.

In the case of a Redcap terminal, an available bandwidth may be narrower than 100 MHz. That is, a Redcap
terminal may use a bandwidth of 5 MHz or a bandwidth narrower than 5 MHz. In this case, a maximum number of available
resource blocks (RBs) is defined by a specification, as shown in Table 5 below. Table 5 shows a maximum number of
available RBs according to a bandwidth and a subcarrier spacing (SCS).

[Table 5]

| SCS (kHz) | 5MHz | 10MHz | 15MHz | 20MHz | 25MHz | 30MHz | 40MHz | 50MHz | 60MHz | 80MHz | 90MHz | 100MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

Here, in case a long sequence including 839 samples is used, one RE has a frequency interval of 1.25 kHz or 5 kHz so that the 893 samples may be sufficiently included in 5 MHz. However, even when the long sequence is used, if a dedicated bandwidth allocated within 3 MHz is used, because one RE frequency spacing of 5 kHz SCS is wider than 1.25 kHz, the number of available REs within 3 MHz may be insufficient for RACH preamble transmission. In addition, for the short sequence using an SCS of 15 kHz or 30 kHz, 132 of 139 samples may be transmitted through 11 RBs, that is, $12 \times 11 = 132$ REs, but the remaining 7 samples are not transmitted.

Accordingly, as for transmission of a RACH preamble requiring a predetermined number of REs, the present disclosure is directed to showing a method of mapping a sequence to a limited number of REs and methods for solving related issues. For example, the present disclosure proposes a method of indicating a number of RBs to be used through SIB.

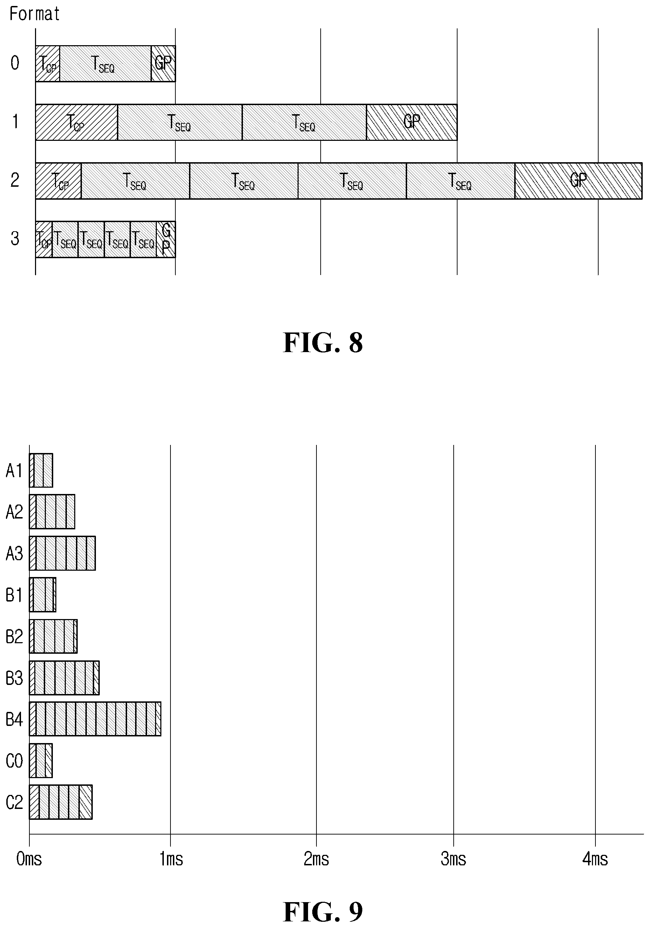

A PRACH may be divided into long sequence-based RACH preambles as illustrated in FIG. 8 or divided into short sequence-based RACH preambles as illustrated in FIG. 9. FIG. 8 illustrates a random access channel (RACH) preamble example based on a long sequence. Referring to FIG. 8, a long sequence-based RACH preamble includes a sequence with a length of 839 and has various formats (e.g., formats 0, 1, 2, 3). Herein, each of the formats may be applied based on coverage and/or whether or not there is a high speed situation. For example, for the coverage of LTE, a RACH preamble of Format 0 may be used, and for a high speed situation, a RACH preamble of Format 3 may be used.

FIG. 9 illustrates a RACH preamble example based on a short sequence. Referring to FIG. 9, a short sequence-based RACH preamble includes a sequence with a length of 139 and has various formats (A1, A2, A3, B1, B2, B3, B4, C0, C2). The short sequence may be used when an SCS is 15 Kz or 30 kHz. When the SCS is 15 Kz or 30 kHz, a total number of REs within a 5 MHz bandwidth is larger than 139, which is the number of sequence samples, and thus the above-described problem does not occur.

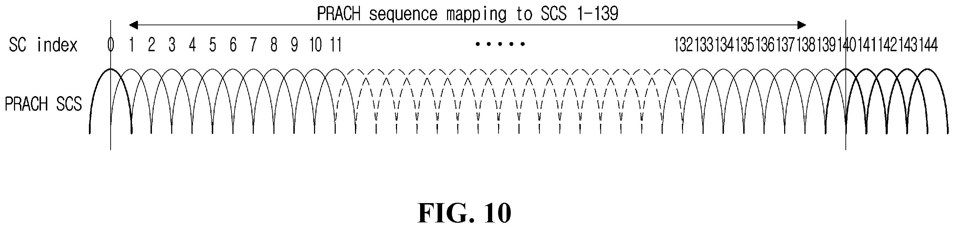

An SCS, at which a short sequence is used, is 15 kHz or 30 kHz and is much larger than an SCS at which a long sequence is used. Accordingly, because a RE occupies a large frequency area, unlike the long sequence, there is a problem that only a small number of REs are available in a narrow band. Thus, there may be a case in which a terminal cannot transmit 139 samples within a given band. For example, referring to Table 5, when an SCS is 30 kHz, 11 RBs may be used within a 5 MHz bandwidth. Herein, if another terminal transmits a PUSCH in an adjacent band to a band in which a RACH preamble is transmitted, interference may occur as illustrated in FIG. 10.

FIG. 10 illustrates an interference example of a short sequence. Referring to FIG. 10, a sample #0 is shown to interfere with an adjacent band of a sample #140. Accordingly, it is desirable to allocate as many gaps as 1 or 2 REs are allocated to a front end of a first RB in a frequency area and to place sequence samples from a next RE. In addition, some REs of a rear end of a last RB may also be allocated as gaps in the frequency area. A RE allocated as gap may not be filled with a sequence sample. Thus, interference shown in FIG. 10 may be prevented. That is, for stable RACH preamble transmission, the number of REs to be secured should be larger than a sum of the number of samples of a specific sequence (= the number of REs) and the number of REs allocated as gaps of a front end and/or a rear end. To this end, a parameter $\bar{k}$ may be defined as shown in Table 6. Table 6 shows a RE offset for transmitting a PRACH.

[Table 6]

| $L_{RA}$ | $\Delta f^{RA}$ for PRACH | $\Delta f$ for PUSCH | $N_{RB}^{RA}$, allocation expressed in number of RBs for PUSCH | |
|---|---|---|---|---|
| 839 | 1.25 | 15 | 6 | 7 |
| 839 | 1.25 | 30 | 3 | 1 |
| 839 | 1.25 | 60 | 2 | 133 |
| 839 | 5 | 15 | 24 | 12 |
| 839 | 5 | 30 | 12 | 10 |
| 839 | 5 | 60 | 6 | 7 |
| 139 | 15 | 15 | 12 | 2 |
| 139 | 15 | 30 | 6 | 2 |
| 139 | 15 | 60 | 3 | 2 |
| 139 | 30 | 15 | 24 | 2 |
| 139 | 30 | 30 | 12 | 2 |
| 139 | 30 | 60 | 6 | 2 |
| 139 | 60 | 60 | 12 | 2 |

(continued)

| $L_{RA}$ | $\Delta f^{RA}$ for PRACH | $\Delta f$ for PUSCH | $N_{RB}^{RA}$, allocation expressed in number of RBs for PUSCH | |
|---|---|---|---|---|
| 139 | 60 | 120 | 6 | 2 |
| 139 | 120 | 30 | 24 | 2 |
| 139 | 120 | 120 | 12 | 2 |

Table 6 shows the offset $\bar{k}$ indicating how many REs of a front end of a first RB are to be empty in a frequency area allocated according to an SCS in order to place a PRACH sequence. According to an embodiment, some REs of a rear end of a last RB may also be empty. According to Table 6, the offset $\bar{k}$ is defined as 2 for a case in which a short sequence including 139 samples is used. This may mean that, when a short sequence including 139 samples is used, 2 RE of a front end should be empty in a first RB. If one RE is empty or no RE is left used, interference with a PUSCH may occur as described above, but a base station may operate suitable scheduling such that PUSCH transmission is not performed in an adjacent band at a corresponding transmission time.

Hereinafter, the present disclosure will describe various embodiments for operating a PRACH sequence, when the number of available REs excluding REs to be empty at both band edges is smaller than a required number of REs for transmitting the PRACH sequence. In case a wider BW(P) than 5 MHz is used, the embodiments described below may be applied not only to a short sequence including 139 samples but also to other sequences, for example, a long sequence including 839 samples.

Embodiment #1: A method of mapping a PRACH sequence and offset REs within an available PRB

Embodiment 1-1: A method of puncturing a same number of REs in two RBs at both edges within a band

For example, in case 139 samples of a short sequence are transmitted through 11 PRBs at 30 kHz, because the 11 PRBs include 132 REs, 7 out of the 139 samples may be punctured. Additionally, in order to mitigate interference, a terminal leaves a same number of REs, for example, 1 RE or 2 REs blank at both edges and maps sequence samples to the remaining REs. In this case, if one RE is empty each at both edges, 2 out of the 139 samples are additionally punctured. That is, if 1 RE or 2 REs are empty at both edges, 9 or 11 out of the 139 samples are not transmitted, and thus PRACH performance degradation may be severer than when 7 samples are punctured. However, in case REs are empty at both edges of a band, interference with another channel in an adjacent band may be reduced. As compared with transmission of a total of 139 samples, performance degradation is less severe when 1 RE is empty at both edges than when 2 REs are empty at both sides. However, an interference effect on an adjacent band when 1 RE is empty at both edges may not be greater than an interference effect on an adjacent band when 2 REs are empty at both edges. For reference, as shown in Table 6, 2 REs may be a minimum offset value capable of cancelling interference with an adjacent band.

Embodiment 1-2: A method of puncturing a different number of REs in RBs at both edges

For example, a terminal may leave 2 REs blank at a front end of a first RB and leave 3 REs blank at a rear end of a last RB. As another example, the terminal may leave 1 RE blank at the first end of the first RB and select remaining REs to be empty and leave them blank at the rear end of the last RB. As another example, the terminal may leave 1 RE blank at the rear end of the last RB and leave remaining REs blank at the front end of the first RB.

Alternatively, according to Table 6, a terminal may leave 2 REs blank at a front end of a first RB and leave only 1 last RE of a last RB. In this case, K1 is utilized as it is, but a minimum number of REs, that is, only 1 RE is empty in order to minimize puncturing and minimize interference in a high-frequency band.

Embodiment 1-3: A method of leaving REs of a front end and REs of a rear end blank in only one RB of two RBs at both edges

According to this method, one of two RBs at both edges may be fully used without RB being empty. For example, 1 RE or 2 REs may be empty only in a first RB. Alternatively, the first RB may not be empty, but sequence samples may be mapped starting from a first RE of the first RB, and a last 1 RE or last 2 REs may be empty in a last RB. Thus, in case at least one RE is empty only in any one of two RBs, the number of punctured samples may be smaller than the number of punctured samples in the above-described Embodiment 1-1 and Embodiment 1-2. However, when at least one RE is empty only in any one of two RBs, interference is possible to be concentrated on one side of a band. Accordingly, which RB will have at least one RE empty may be indicated in advance through signaling of a higher layer (e.g., SIB, RRC signaling).

Embodiment #2: A method of determining a mapping start location of a PRACH sequence

According to Embodiment 2, REs of both edges, which are available for reducing interference with an adjacent band, are not empty.

Embodiment 2-1: A method of mapping a sequence from a first RE

For example, a terminal may map a sequence from a first RE of a first RB. In this case, the sequence may start from the first RE of the first RB, and a rear part of the sequence may be punctured.

Embodiment 2-2: A method of mapping by aligning a center of a sequence with a central RE

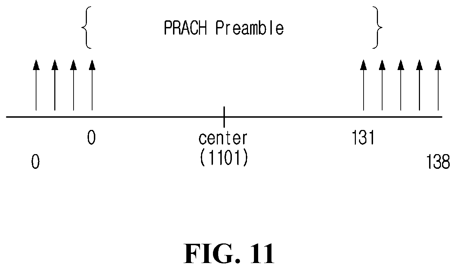

For example, as illustrated in FIG. 11, a terminal may perform mapping by aligning a center 1101 of a sequence with a central RE among REs within a band. FIG. 11 illustrates an example in which a center of a sequence is aligned with a central RE. In this case, both ends of the sequence may be punctured.

In the case of Embodiment #2, a possibility of interference with an adjacent area of a use band may be higher than a possibility of interference in Embodiment #1. In Embodiment #2, $\bar{k}$ may be set to 0 or set to a negative value. That is, Embodiment #2 needs to endure a certain degree of interference but minimizes the number of punctured samples to 7 in a sequence of a PRACH, thereby minimizing performance degradation of the PRACH itself.

Embodiment #3: A method of determining a different value for a length of a PRACH sequence

A sequence with a different length from a sequence length, which is determined based on a definition in a specification, may be used. For example, the different length may be determined as a greatest prime number that is smaller than a required sequence length. Generally, to prevent correlation, a length of a sequence may be set to a prime number that has only two factors, that is, 1 and the number itself.

Embodiment 3-1: A method of reusing a value of $\bar{k}$ of Table 6 as it is like in Embodiment #1

In case a length of a sequence is shorter than a required sequence length and the value of $\bar{k}$ is reused as it is, the length of the sequence may be set to a maximum prime number that minimizes puncturing. For example, in case the number of available REs is 132 and $\bar{k}$ is 2, a sequence length may be determined as 127, which is a maximum prime number among prime numbers smaller than 130 that is obtained by subtracting the $\bar{k}$ value from the required sequence length of 132. In case a length of a sequence is 127, a terminal may leave 2 REs blank at a front end of a first RB and leave 3 REs blank at a rear end of a last RB. That is, $\bar{k}$ of Table 6 may be used without being modified.

Embodiment 3-2: A method of using a value of $\bar{k}$ of Table 6, like in Embodiment #1

A length of a sequence may be set to a maximum prime number among prime numbers that are smaller than a required sequence length. For example, in case the number of available REs is 132, a sequence length may be determined as 131 that is a maximum prime number among prime numbers that are smaller than the required sequence length of 132. In case a length of a sequence is 131, a terminal may leave 2 REs blank at a first end of a first RB and use all REs in a last RB. In this case, 1 out of 131 samples may be punctured.

Embodiment 3-3: A method of using the setting of $\bar{k}=1$ in the above-described Embodiment 3-2

For example, in case a length of a sequence is 131, a terminal may leave 1 RE blank at a front end of a first RB and map the sequence to all the remaining REs. In this case, the sequence including 131 samples may be transmitted without puncturing, and interference at one end of a band may be reduce. However, interference may occur at the other end of the band.

Embodiment 3-4: A method of applying $\bar{k}=1$ to both sides in the above-described Embodiment 3-2

For example, in case a length of a sequence is 131, a terminal may leave a first RE of a first RB and a last RE of a last RB blank. In this case, frequency interference for transmission of a PUSCH may be reduced, but 1 out of 131 samples of a RACH preamble may be punctured.

As for the above-described embodiments 3-1 to 3-4, various applications using higher signaling may be possible.

In the above-described embodiments, the present disclosure exemplifies 11 RBs at a 30 kHz SCS of a short sequence. However, the above-described embodiments may also be applied to a long sequence and/or a short sequence, when a bandwidth is equal to or narrower than 5 MHz. Additionally, for example, in the case of a long sequence with a length of 839 in a 3 MHz bandwidth, the number of sequence samples may be larger than a total number available REs in Format 3 using a 5 kHz SCS. In this case, it is possible to apply a method of leaving some REs blank at both edges of a frequency band for reducing interference and protecting a user of another channel, like in the above-described Embodiment #1, a method of using all REs for minimizing puncturing on sequence samples, like in Embodiment #2, or a method of modifying a length of a sequence to another length equal to a maximum prime number among prime numbers smaller than a predetermined sequence length and then transmitting a PRACH with the modified sequence length, like in Embodiment #3.

In case a RACH preamble sequence cannot be entirely mapped to REs within an available bandwidth, another preamble sequence with a length of a maximum prime number, which is smaller than a designated length of preamble sequence, may be transmitted. There may be various transmissible sequences with lengths of prime numbers within a reduced bandwidth, but it is desirable to use a sequence with a length of a maximum prime number among them.

Embodiment #4: A method of compensating performance degradation caused by puncturing of a PRACH sequence

According to some of the methods in the above-described embodiments, a portion of a RACH preamble sequence may be punctured. In case a portion of a RACH preamble sequence is punctured, coverage may be reduced as compared to when the RACH preamble sequence is not punctured. Accordingly, the present disclosure proposes embodiments in which performance degradation caused by such coverage reduction may be compensated. In FIG. 9, a shaded part represents PRACH transmission in one frequency area. FIG. 9 shows that PRACH transmission is repeated over time. That is, a RACH preamble includes a repetition of a sequence. Table 7 below shows the number of repetitions according to each PRACH format.

[Table 7]

| Format | Number of repetitions |
|--------|----------------------|
| 0 | 0 |
| 1 | 1 |
| 2 | 3 |
| 3 | 3 |
| A1 | 1 |
| A2 | 3 |
| A3 | 5 |
| B1 | 1 |
| B2 | 3 |
| B3 | 5 |
| B4 | 11 |
| C0 | 0 |
| C2 | 3 |

In case a sequence is punctured according to the above-described embodiments, performance may be degraded. In this case, when transmitting PRACHT, a terminal may compensate performance degradation caused by puncturing by applying a larger number of repetitions than the number of repetitions defined for each format in Table 7.

Embodiment 4-1: A new PRACH format may be defined to have a larger number of repetitions than an existing number of repetitions. For example, Formats 5, 6 and 7 for long sequence and Formats A4, A5, B5, C3 and C4 or Formats Dx and Ex for short sequence may be newly defined.

Embodiment 4-2: The number of repetitions may be increased for some of the existing PRACH formats, while no new PRACH format is defined and each form of the existing PRACH formats is retained. For example, a terminal may increase the number of repetitions for some formats by adding a specific number to the number of repetitions or multiplying the number of repetitions by a multiple. In this case, the added specific number or the multiple may be indicated to the terminal in advance through higher layer signaling (e.g., SIB, RRC signaling) or other signaling.

Embodiment #5: Other RE mapping methods of PRACH sequence

According to Embodiment #5, an offset may be applied to a first RB.

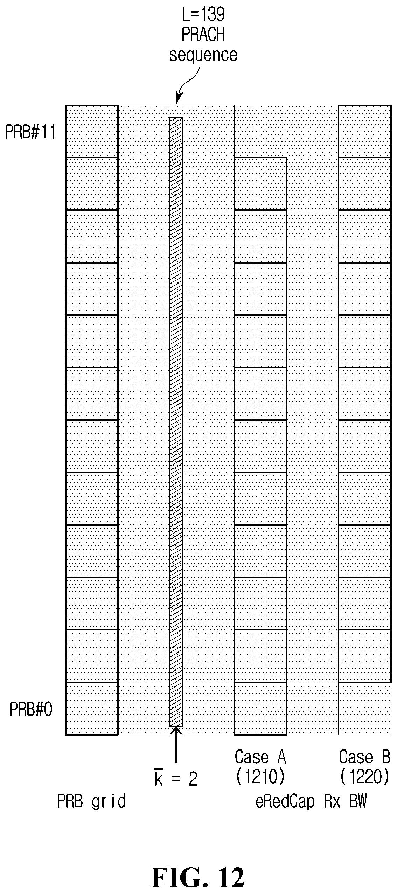

The above-described Embodiment #1 to Embodiment #4 are described based on Case A 1210 illustrated in FIG. 12. FIG. 12 illustrates an example of a starting RB of a PRACH sequence. Referring to FIG. 12, Case A 1210 is a case in which 11 RBs are used in a 5 MHz bandwidth. However, from the perspective of a base station, the use case of 5 MHz BW(P) is expected to be rare. Accordingly, when a PRACH-related resource is configured, it is common to allocate 12 RBs based on a 30 kHz SCS. When 12 RBs are allocated, 139 samples for a short sequence may all be transmitted. From the perspective of the base station, if a channel bandwidth is equal to or wider than 5 MHz, as in Case B 1220 of FIG. 12, the remaining 11 PRBs excluding a first RB may be configured to be used. This aims for co-existence with an existing PRACH configuration because the base station is capable of using 12 PRBs. In this case, whether or not to leave the first RB blank may be set in advance through signaling of SIB. The above-described embodiments may be applied also to Case B 1220.

Accordingly, in a situation where the above-described embodiments are applied for a PRACH sequence, a sequence sample may start from a first RB or a second RB. For example, in Embodiment #2, a sequence sample is not mapped starting from a first RE of a first RB but may be mapped starting from a location to which an additional offset for RB and a $\bar{k}$ value are applied, as shown in Case B x520 of FIG. 12. Thus, a starting sample of the sequence may become different.

That is, from which RB among 12 RBs within a band a sequence with a 30 kHz SCS is to be mapped may be determined by higher layer signaling, and within a RB thus determined, a RE, at which mapping of samples will start, may be determined by $\bar{k}$. $\bar{k}$ is a sequence offset of PRACH and may be set in a symbol unit. In addition, if a value indicated by higher layer signaling to indicate a RB location to be mapped to a sequence among 12 PBs within a band is assumed to be X, X is an offset of a PRACH PRB and may be set in a RB unit. X may be 0 or 1.

X and/or $\bar{k}$ may be transmitted to a terminal in advance through an SIB. Alternatively, X and/or $\bar{k}$ may be set to a specific value for a specific terminal (e.g., a Redcap terminal) in advance. An example of specific signaling for X and/or may be described as follows.

Example A: $\bar{k}$ and X may be delivered to a terminal by higher layer signaling. In this case, $\bar{k}$ and X are operated separately.

Example B: X may not be used, and 12 symbols may be included in candidate values of $\bar{k}$.

Example C: no $\bar{k}$ value of Table 6 is used, and a $\bar{k}$ value may be indicated through signaling of SIB and the like.

Embodiment #6: A method of restricting the use of a sequence with a specific form, when a PRACH is applied for a 5 MHz or narrower spectrum

In case a spectrum band within 5 MHz is used, a sequence exceeds a corresponding bandwidth according to an SCS. Accordingly, an available sequence not exceeding a bandwidth may be defined in advance. Alternatively, the use of a sequence exceeding a bandwidth may be restricted by using RRC, SIB and the like. For example, in case a PRACH length of a long sequence or a short sequence defined in the existing 5G NR exceeds the number of available PRBs in a narrowband width, specific PRACH formats of a corresponding PRACH sequence may be predefined not to be used. Alternatively, in a higher layer, specific PRACH formats may be configured not to be used. Accordingly, a terminal may not expect to use a specific SCS, a specific PRACH format, or a PRACH configuration index corresponding thereto. In this case, the implementation or operation of the terminal is advantageously simplified.

Embodiment 6-1: A RACH preamble including a short sequence with an SCS of 30 kHz or larger or a specific SCS or larger may not be used. For example, in environments such as railways or subways, a service may not require various SCSs. Accordingly, when operating an ultra-narrowband network using 5 MHz or less, it may be convenient to restrict the use of a RACH preamble of a specific SCS that significantly exceeds a bandwidth. It is possible to puncture a sequence in a specific form or to define a new form of sequence, but as shown in this embodiment, a system may be operated without significant modification of a specification by excluding the use of a RACH preamble of a specific SCS in a specific frequency band.

A short sequence may be designated to be used only in a specific SCS. The short sequence may be predefined to use only a 15 kHz SCS. Alternatively, a base station may exclude transmission of an SCS parameter in a higher layer (e.g., RRC). In case the parameter is not received, a terminal may recognize that 15 kHz is the only available SCS. Thus, signaling overhead may be reduced. According to another embodiment, a short sequence using 5 kHz or another SCS may be restricted not to be used, when an SCS of BWP is equal to or wider than 30 kHz. According to another embodiment, for every case of a specific situation (e.g., an excessively small BWP size), a short sequence may be defined not to be used entirely.

Embodiment 6-2: A RACH preamble including a long sequence of a 5 kHz SCS may not be used. In case a designated bandwidth is as narrow as 3 MHz, the use of a PRACH of a long 5 kHz sequence may be restricted according to situations. In this case, the restriction may be applied without significant modification of a specification. Alternatively, it is also possible to specify that a long sequence is not used for all SCSs and all formats. According to another embodiment, a long sequence using 5 kHz or another SCS may be restricted not to be used when an SCS of BWP is equal to or wider than 30 kHz.

Embodiment 6-3: For a specific service using a bandwidth of a narrow spectrum, a format exceeding a length of an existing PRACH sequence and a PRACH configuration index and SCS corresponding thereto may be defined in advance not to be used. Accordingly, a terminal may not expect a configuration of a base station for the PRACH configuration index and SCS.

Embodiment 6-4: In a higher layer, for a spectrum within 5 MHz, the use of a specific embodiment among the above-described embodiments may be configured to be excluded. For example, according to bandwidth in the spectrum, whether or not to exclude the use of puncturing, rate matching and a new sequence, which are presented in the above-described embodiments, or an SCS, a sequence and a format defined in a specification may be configured in a higher layer. In this case, configuration information restricting settings (e.g., SCS, PRACH format, long sequence, short sequence) related to an operation within a designated bandwidth may be signaled.

Embodiment 6-5: In case a sequence length according to SCS and PRACH settings configured for a narrow bandwidth of a corresponding spectrum in a higher layer (e.g., RRC) exceeds the number of PRBs available in the bandwidth, a puncturing method, a rate matching method, or a method of adjusting the number of repetitions among the above-described embodiments may be applied in a terminal.

Embodiment 6-6: For a case in which a preamble index is signaled in a RRC, an additional parameter may be defined for a narrow bandwidth (e.g., BWP≤5Mhz), apart from notifying an existing PRACH index.

In a PRACH-related configuration, configuration information including a RACH-related parameter for a narrow bandwidth may be transmitted. For example, the RACH-related parameter for a narrow bandwidth may indicate a preamble available in an environment where a narrow bandwidth is used. That is, at least a portion of preamble formats available under normal circumstances may be specified for the narrow bandwidth. According to an embodiment, the parameter may be signaled through an SIB. If the parameter is not received, a format of an existing PRACH configuration may be used. The parameter may be used for additional signaling for not exceeding BWP of the bandwidth and be applied only to a terminal with restricted use of the bandwidth.

An additional parameter may be set in a separate initial BWP. In case the separate initial BWP exceeds a bandwidth range of a corresponding BWP of a PRACH configuration format, the separate initial BWP is not used, and a legacy initial BWP may be used. If a preamble format exceeding the BWP bandwidth range is configured in the legacy initial BWP, a corresponding cell may be recognized as a barred cell.

Embodiment 6-7: In case there are insufficient frequency resources to map preamble sequences of PRACH in a specific bandwidth, a preamble format of a corresponding index may not be used. If a base station configures the corresponding index, the following operations may be performed. As for a long sequence, if a length of the sequence exceeds a limit of bandwidth, a terminal may use a long sequence of a PRACH format of another sequence. As for a short sequence, if a length of the sequence exceeds a limit of bandwidth, the terminal may use a short sequence of a PRACH format of another sequence. In case a length of a PRACH sequence for 2-step RACH exceeds a limit of bandwidth, the terminal may fall back to 4-step RACH instead of using the 2-step RACH. In case a length of a long sequence or a short sequence exceeds a limit of bandwidth, the terminal may consider a corresponding cell a barred cell, not perform a PRACH attempt in the cell, and search for another cell.

Embodiment 6-8: In case a preamble sequence is larger than a bandwidth of BWP or channel, PRBs of some guard bands or an adjacent PRB band may be used. For example, in the case of a 30 kHz SCS of 5 MHz BWP, 11 PRBs may be used. Herein, transmitting a short sequence requiring 12 RPBs may not cause any significant problem. Accordingly, it is possible to secure an additional PRB in a guard band. However, an interference issue may occur.

In this case, configurations related to the number of added PRBs and which PRB is to be added may be transmitted through RRC signaling. For example, if only 1 PRB is added, it may be specified whether it will be added in a lowest guard band or in a highest guard band. An indication of additional RPB allocation may be transmitted through RRC singling or higher layer signaling.

In case 2 or more PRBs are additionally allocated in a guard band or an adjacent sideband, if the 2 or more PRBs are allocated on only one side of a channel bandwidth, an interference problem may occur. Accordingly, selecting PRBs to be additionally allocated in a distributed manner on both sides of the channel bandwidth is advantageous for resolving the interference problem. An indication of a selection location of the above-described PRBs may be signaled in a higher layer.

An embodiment in which additional PRBs are allocated within a part of a corresponding guard band may also be applied in a situation where a BWP is limited and also be applied to a case in which a channel bandwidth is set to a narrow band. That is, in an adjacent guard band of the channel bandwidth, further PRBs may be additionally used.

As described above, a preamble sequence may be transmitted by further using a resource within a guard band. Herein, according to a channel bandwidth, several PRBs or dozens of PRBs may be present on each side of the guard band.

Embodiment 6-9: In case a specific preamble sequence exceeds a BWP or bandwidth, it is possible to reallocate a PRB by using an SCS smaller than a specified SCS. For example, in the case of a short sequence using a 30 kHz SCS, a PRB may be processed by using a 15 kHz SCS. Additionally, a terminal may reallocate a PRB for a corresponding slot and expect scheduling to be performed such that the slot has no other uplink transmission except a RACH preamble. As another example, in the case of a long sequence using a 5 kHz SCS, a PRB may be processed by using a 1.25 kHz SCS. Additionally, the terminal may reallocate a PRB for a corresponding slot and expect scheduling to be performed such that the slot has no other uplink transmission except a RACH preamble.

In terms of development cost reduction and efficiency, a Redcap device with approximately 10 Mbps to 20 Mbps performance such as a wearable device is expected to be activated from the perspective of mIoT not eMBB. Herein, services may be mainly provided not in a wide bandwidth of 5G eMBB but in a narrow bandwidth of a narrow band, and a Redcap device may be a main target of such a service. In this case, from the perspective of PRACH, the Redcap device may not use a required frequency band in comparison with a legacy broadband device. Accordingly, for a case in which such a PRACH puncture occur on a sequence, the present disclosure has proposed methods of providing services with appropriate coverage, while minimizing performance degradation. Thus, even in a narrow band, it is expected that cell coverage performance intended by legacy PRACH may be retained and a low-cost efficient Redcap service may be provided.

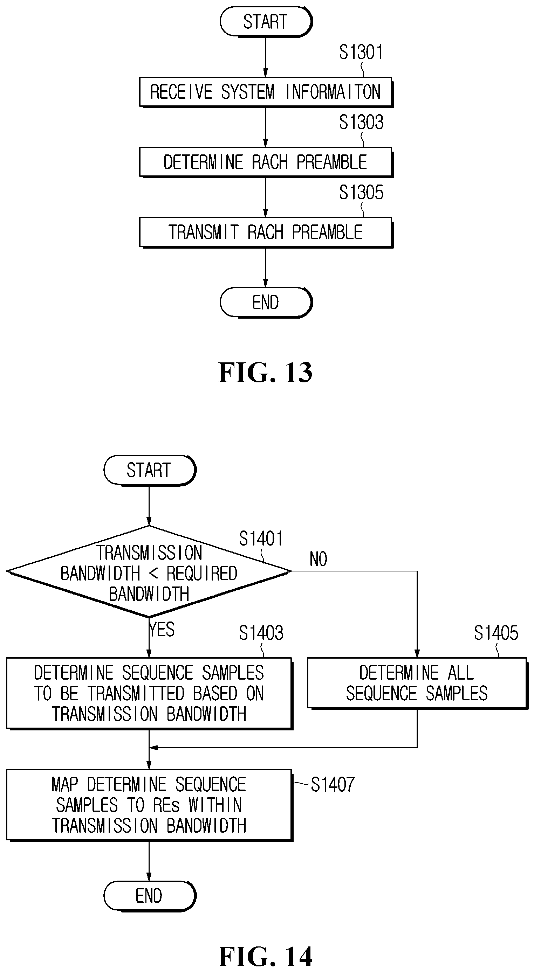

FIG. 13 illustrates an example of a procedure of transmitting a RACH preamble for random access in a wireless communication system according to an embodiment of the present disclosure. FIG. 13 exemplifies a method for operating a terminal.

Referring to FIG. 13, at step S1301, the terminal receives system information from a base station. For example, the terminal may receive a master information block (MIB) and at least one system information block. Although not illustrated in FIG. 13, prior to this step, the terminal may receive a synchronization signal block (SSB) including at least one synchronization signal through a cell search operation and obtain synchronization with a base station. The terminal may obtain information for accessing the base station and information for performing a procedure for subsequent communication with the base station. Herein, system information may include information related to a RACH. For example, the information related to the RACH may indicate and/or include at least one of a number and/or location of REs to be punctured in a PRB used for RACH transmission, a RB offset indicating a RB to be transmitted in RACH transmission among RBs within a transmission bandwidth, a use-restricted sequence format, whether or not a new sequence format is used, and rate matching information.

At step S1303, the terminal determines a RACH preamble based on the system information and the transmission bandwidth. According to an embodiment, the terminal may identify the information related to the RACH based on the system information, identify a type of an available RACH preamble based on the transmission bandwidth, and then determine the RACH preamble based on the information related to the RACH and the type of PRACH preamble. Herein, the transmission bandwidth means a bandwidth available to the terminal. Based on the transmission bandwidth, the terminal may identify either a long preamble including 839 samples or a short preamble including 139 samples as an available preamble type. For example, in case the transmission bandwidth corresponds to a narrow bandwidth of 5 MHz or less, the terminal may identify availability of the short preamble, and in case the transmission bandwidth corresponds to a bandwidth wider than 5 MHz, the terminal may identify availability of the long preamble. For example, a short preamble format using a 15 kHz SCS and a long preamble format using a 1.25 kHz SCS may be supported for a transmission bandwidth less than 5 MHz. For example, based on the information related to the RACH and the type of PRACH preamble, the terminal may determine the RACH preamble by determining at least one of the number of REs to be empty within the transmission bandwidth, a sequence mapping location, a format of a sequence, the number of sequence samples, a length of the sequence, and the number of samples to be punctured.

At step S1305, the terminal transmits the determined RACH preamble through the RACH. The terminal transmits the RACH preamble to the base station by using REs within the transmission bandwidth. That is, the terminal may map samples included in the RACH preamble to the REs within the transmission bandwidth, perform OFDM modulation and then transmit an OFDM symbol including the RACH preamble. Herein, the terminal may map the RACH preamble to a RACH occasion (RO) corresponding to the received SSB. Next, although not illustrated in FIG. 13, a terminal random access procedure may be performed.

FIG. 14 illustrates an example of a procedure of transmitting some or all of sequence samples of a RACH preamble in a wireless communication system according to an embodiment of the present disclosure. FIG. 14 exemplifies a method for operating a terminal.

Referring to FIG. 14, at step S1401, the terminal determines whether or not a transmission bandwidth is smaller than a required bandwidth. According to an embodiment, the terminal determines whether or not the transmission bandwidth is smaller than the required bandwidth, by comparing an available bandwidth and a bandwidth required for transmission of a RACH preamble including a designated number of samples. Herein, if the RACH preamble to be transmitted is a long preamble, the required bandwidth is a bandwidth including 839 or more REs, and if the RACH preamble to be transmitted is a short preamble, the required bandwidth is a bandwidth including 139 or more REs. That is, the terminal may determine whether or not the transmission bandwidth is smaller than the required bandwidth, by comparing a total number of REs according to available RBs within the transmission bandwidth and a required number of REs according to sequence samples of the RACH preamble. The total number of REs according to available RBs within the transmission bandwidth may become different according to an SCS. For example, referring to Table 5, in case the transmission bandwidth is 5 MHz and the SCS is 30 kHz, the total number of REs according to available RBs may be 132 (11x12). Herein, if the RACH preamble to be transmitted is a short preamble, because at least 139 REs are required, the terminal may determine that the transmission bandwidth is smaller than the required bandwidth. As another example, referring to Table 5, in case the transmission bandwidth is 5 MHz and the SCS is 15 kHz, the total number of REs according to available RBs may be 300 (25x12). Herein, if the RACH preamble to be transmitted is a short preamble, because at least 139 REs are required, the terminal may determine that the transmission bandwidth is larger than the required bandwidth.

In case the transmission bandwidth is smaller than the required bandwidth, at step S1403, the terminal determines sequence samples to be transmitted based on the transmission bandwidth. In case the transmission bandwidth is smaller than the required bandwidth, the terminal may determine that all sequence samples with a designated length cannot be transmitted, and determine some sequence samples to be transmitted among all the sequence samples or sequence samples with a new format. According to an embodiment, some sequence samples to be transmitted or sequence samples with a new format may be determined based on RACH-related information obtained from system information or further based on a predefined rule. For example, the terminal may determine at least one of the number of samples to be transmitted among all the sequence samples, the number of sample to be punctured, locations of samples to be punctured or sequence samples with a new format, based on at least one of a total number of REs corresponding to the transmission bandwidth, the RACH-related information and the predefined rule. According to an embodiment, some sequence samples to be transmitted may be determined by further considering a number and/or location of REs to be empty in consideration of interference with an adjacent band.

In case the transmission bandwidth is greater than or equal to the required bandwidth, at step S1405, the terminal determines a designated number of sequence samples within the transmission bandwidth. In case the transmission bandwidth is greater than or equal to the required bandwidth, the terminal may determine that all sequence samples with a designated length can be transmitted, and determine all the sequence samples as sequence samples to be transmitted. For example, if the RACH preamble to be transmitted is a short preamble, the terminal may determine 139 sequence samples as sequence samples to be transmitted, and if the RACH preamble to be transmitted is a long preamble, the terminal may determine 893 sequence samples as sequence samples to be transmitted.

At step S1407, the terminal maps the determined sequence samples to REs within the transmission bandwidth. For example, the terminal may identify REs to which sequence samples within the transmission bandwidth are to be mapped, and map the determined sequence samples to the identified REs. Herein, the REs, to which the sequence samples are to be mapped, may be determined based on at least one of the RACH-related information and the predefined rule.

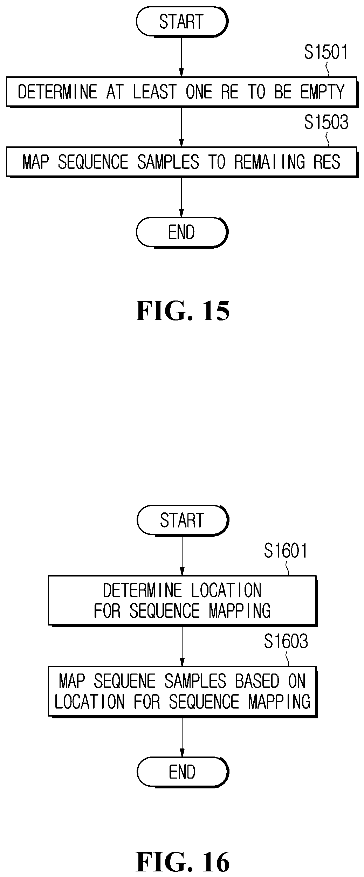

FIG. 15 illustrates an example of a procedure of mapping some of sequence samples of a RACH preamble in a wireless communication system according to an embodiment of the present disclosure. FIG. 15 exemplifies a method for operating a terminal.

Referring to FIG. 15, at step S1501, the terminal determines at least one RE to be empty. The terminal may determine a number and/or location of REs to be empty among all REs within a transmission bandwidth. According to an embodiment, the number and/or location of REs to be empty may be determined according to a predefined rule or be indicated by higher layer signaling such as SIB or RRC signaling. For example, as described in Embodiment 1-1, Embodiment 1-2 or Embodiment 1-3 of Embodiment #1, the terminal may determine a number and/or location of REs. to which sequence samples are not mapped, among REs within the transmission bandwidth.

At step S1503, the terminal maps sequence samples to the remaining REs excluding at least one RE to be empty. Herein, based on the number and/or location of REs to be empty, the terminal may puncture at least one sample of the sequence samples. For example, in order to map sequence samples to the remaining REs excluding at least one RE to be empty, that is, available REs respectively, the terminal may puncture at least one of the sequence samples.

FIG. 16 illustrates an example of a procedure of aligning sequence samples of a RACH preamble in a transmission bandwidth in a wireless communication system according to an embodiment of the present disclosure. FIG. 15 exemplifies a method for operating a terminal.

Referring FIG. 16, at step S1601, the terminal determines a location in which a sequence is to be mapped. According to an embodiment, the terminal may determine, among all REs within a transmission bandwidth, a RE from which sequence mapping will start. According to an embodiment, the RE from which sequence mapping will start may be determined according to a predefined rule or be indicated by higher layer signaling such as SIB or RRC signaling. For example, as described in Embodiment 2-1 or Embodiment 2-2 of Embodiment #2, the terminal may determine a sequence mapping start location such that a specific sample of a sequence may be aligned with a specific RE. According to an embodiment, the sequence mapping start location may be determined by considering a number and/or location of REs to be empty.

At step S1603, the terminal maps sequence samples based on the location in which the sequence is to be mapped. The terminal may map the sequence samples based on the RE from which sequence mapping will start. For example, in case a first sample of the sequence is mapped to be aligned with a specific RE, the terminal may map samples of the sequence sequentially from the specific RE. As another example, in case a center sample of the sequence is mapped to be aligned with a central RE, the terminal may map the center sample of the sequence to the central RE and then sequentially map samples on both left and right sides of the center sample of the sequence to REs on both left and right sides of the central RE respectively. Herein, among the sequence samples, at least one sample to be punctured may be determined according to a location of a RE from which mapping will start and REs to be empty. For example, the terminal may map sequence samples to REs within a transmission bandwidth based on a location of a determined RE but may not map samples to REs to be empty and puncture sequence samples that have not been mapped to REs.

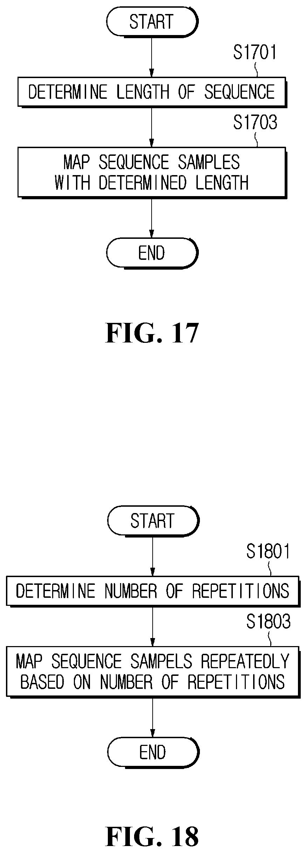

FIG. 17 illustrates an example of a procedure of determining a length of sequence samples of a RACH preamble in a wireless communication system according to an embodiment of the present disclosure. FIG. 17 exemplifies a method for operating a terminal.

Referring to FIG. 17, at step S1701, the terminal determines a length of a sequence. The terminal may determine the length of the sequence as a prime number that is smaller than a required sequence length. The required sequence length may be determined based on at least one of the number of REs within a transmission bandwidth and the number of REs to be empty. For example, as described in Embodiment 3-1, Embodiment 3-2, Embodiment 3-3 or Embodiment 3-4 of Embodiment #3, the terminal may determine the length of the sequence based on the required sequence length.

At step S1703, the terminal maps sequence samples with the determined length to the REs within the transmission bandwidth. Herein, the terminal may identify, among the REs within the transmission bandwidth, a number and/or location of REs to be empty and map sequence samples with the determined length to remaining REs. The number and/or location of REs to be empty may be determined according to a predefined rule or be indicated by higher layer signaling such as SIB or RRC signaling. The terminal may puncture samples not mapped to RE among the sequence samples with the determined length.

FIG. 18 illustrates an example of a procedure of repeatedly mapping sequence samples of a RACH preamble in a wireless communication system according to an embodiment of the present disclosure. FIG. 18 exemplifies a method for operating a terminal.

Referring to FIG. 18, at step S1801, the terminal determines the number of repetitions. The terminal may determine the number of repetitions for repeatedly transmitting sequence samples of a RACH preamble. For example, as described in Embodiment 4-1 or Embodiment 4-2 of Embodiment #4, the terminal may determine the number of repetitions. According to an embodiment, the number of repetitions may be determined according to a predefined rule or be indicated by higher layer signaling such as SIB or RRC signaling. That is, according to an embodiment, the terminal may receive control information including an indication that the number of repetitions defined in a preamble format should be increased.

At step S1803, the terminal repeatedly maps sequence samples based on the number of repetitions. For example, in order to make the sequence samples transmitted repeatedly, the terminal may repeatedly map the sequence samples to available REs over time based on the number of repetitions. The available REs include REs excluding a RE to be empty.

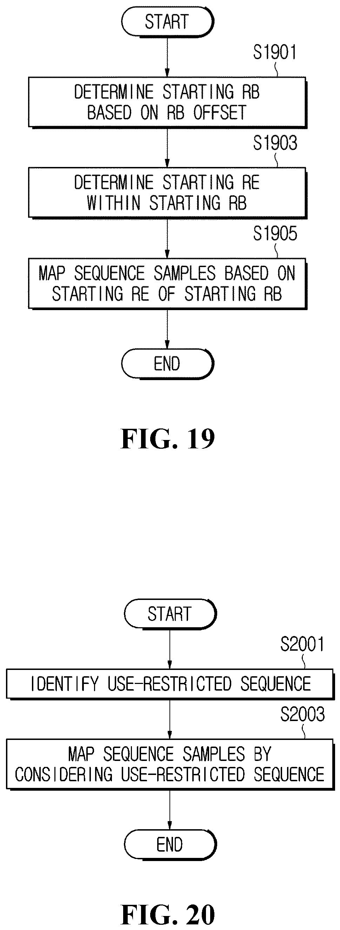

FIG. 19 illustrates an example of a procedure of determining a starting RB for mapping a RACH preamble in a wireless communication system according to an embodiment of the present disclosure. FIG. 18 exemplifies a method for operating a terminal.

Referring to FIG. 19, at step S1901, the terminal determines a starting RB based on a RB offset. The terminal may identify the RB offset based on a predetermined rule or system information and determine the starting RB based on the RB offset. For example, as described in Embodiment #5, based on the RB offset, the terminal may determine, among a plurality of RBs within a transmission bandwidth, a RB from which sequence samples are to be mapped. Herein, the terminal may determine a RB to be empty according to the starting RB. For example, in case a total of 12 RBs are present within the transmission bandwidth and 11 out of the 12 RBs are used, if the starting RB is a first RB, the terminal may determine a last RB as a RB to be empty. In addition, if the starting RB is a second RB, the terminal may determine the first RB as a RB to be empty. According to an embodiment, the RB offset may indicate a RB to be left unused or a RB to be empty.

At step S1903, the terminal determines a starting RE within the starting RB. The terminal may determine the starting RE within the starting RB based on a predetermined rule or system information. For example, as described in Embodiment #5, the terminal may determine a number and/or location of REs to be empty based on a predetermined rule or system information and determine the starting RE based on this.

At step S1905, the terminal maps sequence samples based on the starting RE of the starting RB. The terminal may map the sequence samples to remaining REs excluding a RB to be empty and a RE to be empty and puncture unmapped samples.

FIG. 20 illustrates an example of a procedure of mapping sequence samples based on a use restriction for a RACH preamble in a wireless communication system according to an embodiment of the present disclosure. FIG. 20 exemplifies a method for operating a terminal.

Referring to FIG. 20, at step S2001, the terminal identifies a use-restricted sequence. The terminal may identify information related to the use-restricted sequence based on a predefined rule or higher layer signaling. For example, as described in Embodiment 6-1, Embodiment 6-2, Embodiment 6-3, Embodiment 6-4 or Embodiment 6-5 of Embodiment #6, the terminal may identify information on a sequence with restricted use in a designated SCS, a sequence format with restricted use, and a PRACH configuration index and SCS with restricted use. The designated SCS may be determined based on higher layer signaling.

At step S2003, the terminal maps sequence samples by considering the use-restricted sequence. Based on the use-restricted sequence, the terminal may determine an available sequence, map samples of the determined sequence to available REs within a transmission bandwidth, and puncture unmapped samples. In addition, the available REs may be determined based on a number and/or location of REs to be empty which is determined by a predefined rule or higher layer signaling.

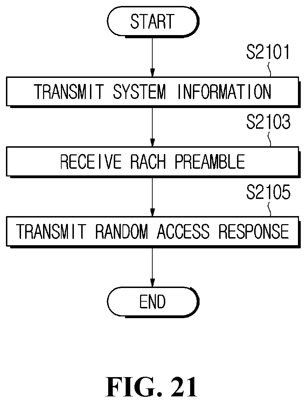

FIG. 21 illustrates an example of a procedure of receiving a RACH preamble for random access in a wireless communication system according to an embodiment of the present disclosure. FIG. 21 exemplifies a method for operating a base station.

Referring to FIG. 21, at step S2101, the base station transmits system information to a terminal. For example, the base station may transmit an MIB and at least one SIB. Although not illustrated in FIG. 21, prior to this step, the base station may transmit an SSB including at least one synchronization signal to the terminal. The terminal may obtain information for accessing the base station and information for performing a procedure for subsequent communication with the base station. According to an embodiment, system information may include information related to a RACH. For example, the information related to the RACH may indicate and/or include at least one of a number and/or location of REs to be punctured in a PRB used for RACH transmission, a RB offset indicating a RB to be transmitted in RACH transmission among RBs within a transmission bandwidth, a use-restricted sequence format, whether or not a new sequence format is used, and rate matching information.

At step S2103, the base station receives a RACH preamble from the terminal. The base station may receive the RACH preamble transmitted from the terminal in one of ROs included in a RACH resource indicated by the system information. Herein, depending on a RO in which the RACH preamble is detected, the base station may identify a downlink beam selected by the terminal.

At step S2105, the base station transmits a random access response message to the terminal. That is, the base station may generate the random access response message to the terminal and transmit DCI including scheduling information for the random access response message and the random access response message. Next, although not illustrated in FIG. 21, the base station may perform RRC signaling for connection setup.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

### Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method for operating a terminal in a wireless communication system, the method comprising:

   receiving system information;
   obtaining information related to a random access channel (RACH) based on the system information;
   identifying a type of an available RACH preamble based on a transmission bandwidth of the terminal;
   selecting a RACH preamble based on the information related to the RACH and the type; and
   transmitting the selected RACH preamble through the RACH.

2. The method of claim 1, further comprising:
   obtaining control information indicating at least one of a subcarrier spacing (SCS), a sequence and a preamble format, **which** are restricted or available according to the transmission bandwidth of the terminal.

3. The method of claim 2, wherein the control information indicates that use of a RACH preamble with at least one SCS is restricted or available.

4. The method of claim 2, wherein the control information indicates that use of a RACH preamble with at least one length is restricted.

5. The method of claim 2, wherein the transmitting of the selected RACH preamble through the RACH comprises, transmitting the RACH preamble by further using a resource belonging to a guard band, based on a configuration related to preamble transmission with an SCS and a sequence length restricted being received through the control information.

6. The method of claim 2, wherein the transmitting of the selected RACH preamble through the RACH comprises, transmitting the RACH preamble by using resource blocks (RBs) that are reallocated at a smaller SCS than a configured SCS, based on a configuration related to preamble transmission with an SCS and a sequence length restricted being received through the control information.

7. The method of claim 1, wherein the transmitting of the selected RACH preamble through the RACH comprises, puncturing at least one of sequence samples of the selected RACH preamble, based on a number of the sequence samples being greater than a number of resource elements (REs) within the transmission bandwidth.

8. The method of claim 7, wherein remaining sequence samples, which are determined by puncturing at least one of the sequence samples, are mapped to remaining resource elements (REs), except for certain REs, in each of RBs at both edges among RBs within the transmission bandwidth, or are mapped to remaining REs, except for certain REs, in one of the RBs at both edges among the RBs within the transmission bandwidth.

9. The method of claim 7, wherein the remaining sequence samples, **which** are determined by puncturing at least one of the sequence samples, are mapped starting from a first RE within the transmission bandwidth, or are mapped such that a central sample of the remaining sequence samples is aligned with a central RE within the transmission bandwidth.

10. The method of claim 1, wherein the transmitting of the selected RACH preamble through the RACH comprises, determining a RACH sequence with a length equal to a maximum prime number that is smaller than a number of available REs according to the transmission bandwidth of the terminal.

11. The method of claim 1, further comprising:
    obtaining control information including an indication that a number of repetitions defined by a preamble format is to be increased.

12. A method for operating a base station in a wireless communication system, the method comprising:

    transmitting system information including information related to a random access channel (RACH); and
    receiving a RACH preamble from a terminal through the RACH,
    wherein the RACH preamble belongs to a type of an available RACH preamble based on a transmission bandwidth of the terminal.

13. A terminal in a wireless communication system, the terminal comprising:

    a transceiver; and
    a processor coupled with the transceiver,
    wherein the processor is configured to:

      receive system information,
      obtain information related to a random access channel (RACH) based on the system information,
      identify a type of an available RACH preamble based on a transmission bandwidth of the terminal,
      select a RACH preamble based on the information related to the RACH and the type, and
      transmit the selected RACH preamble through the RACH.

14. A base station in a wireless communication system, the base station comprising:

    a transceiver; and
    a processor coupled with the transceiver,
    wherein the processor is configured to:

      transmit system information including information related to a random access channel (RACH), and
      receive a RACH preamble from a terminal through the RACH, and
      wherein the RACH preamble belongs to a type of an available RACH preamble based on a transmission bandwidth of the terminal.

15. A communication device comprising:

    at least one processor; and
    at least one computer memory coupled with the at least one processor and storing an instruction that instructs operations when executed by the at least one processor,
    wherein the operations comprises:

      receiving system information;
      obtaining information related to a random access channel (RACH) based on the system information;
      identifying a type of an available RACH preamble based on a transmission bandwidth of the communication device;
      selecting a RACH preamble based on the information related to the RACH and the type; and
      transmitting the selected RACH preamble through the RACH.

16. A non-transitory computer-readable medium storing at least one instruction, the non-transitory computer-readable medium comprising the at least one instruction that is executable by a processor,
    wherein the at least one instruction controls a device to:

      receive system information,
      obtain information related to a random access channel (RACH) based on the system information,
      identify a type of an available RACH preamble based on a transmission bandwidth of the device,
      select a RACH preamble based on the information related to the RACH and the type, and
      transmit the selected RACH preamble through the RACH.

**FIG. 1**

FIG. 2

Radio Frame 10ms

Fixed Size

Subframe 1ms

| 0 | 1 | 2 | 3 | 4 | 5 | 6 | 7 | 8 | 9 |

Subframe={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbol

**FIG. 3**

**FIG. 4**

**FIG. 5**

FIG. 6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S701

S702

S703

S704

S705

S706

S707

S708

- DL/UL ACK/NACK
- UE CQI/PMI RI REPORT
  USING PUSCH AND PUCCH

**FIG. 7**

Format

0 | $T_{CP}$ | $T_{SEQ}$ | GP |

1 | $T_{CP}$ | $T_{SEQ}$ | $T_{SEQ}$ | GP |

2 | $T_{CP}$ | $T_{SEQ}$ | $T_{SEQ}$ | $T_{SEQ}$ | $T_{SEQ}$ | GP |

3 | $T_{CP}$ | $T_{SEQ}$ | $T_{SEQ}$ | $T_{SEQ}$ | $T_{SEQ}$ | GP |

**FIG. 8**

A1

A2

A3

B1

B2

B3

B4

C0

C2

0ms    1ms    2ms    3ms    4ms

**FIG. 9**

**FIG. 10**

EP 4 572 274 A1

PRACH Preamble

0

center
(1101)

131

0

138

**FIG. 11**

L=139
PRACH
sequence

PRB#11

PRB#0

$\overline{k} = 2$

PRB grid

Case A
(1210)

Case B
(1220)

eRedCap Rx BW

**FIG. 12**

START

RECEIVE SYSTEM INFORMAITON — S1301

DETERMINE RACH PREAMBLE — S1303

TRANSMIT RACH PREAMBLE — S1305

END

**FIG. 13**

START

S1401
TRANSMISSION BANDWIDTH < REQUIRED BANDWIDTH

NO

YES

DETERMINE SEQUENCE SAMPLES TO BE TRANSMITTED BASED ON TRANSMISSION BANDWIDTH — S1403

DETERMINE ALL SEQUENCE SAMPLES — S1405

MAP DETERMINE SEQUENCE SAMPLES TO REs WITHIN TRANSMISSION BANDWIDTH — S1407

END

**FIG. 14**

START

DETERMINE AT LEAST ONE RE TO BE EMPTY — S1501

MAP SEQUENCE SAMPLES TO REMAIING RES — S1503

END

**FIG. 15**

START

DETERMINE LOCATION
FOR SEQUENCE MAPPING — S1601

MAP SEQUENE SAMPLES BASED ON
LOCATION FOR SEQUENCE MAPPING — S1603

END

**FIG. 16**

**FIG. 17**

**FIG. 18**

START

DETERMINE STARTING RB
BASED ON RB OFFSET
S1901

DETERMINE STARTING RE
WITHIN STARTING RB
S1903

MAP SEQUENCE SAMPLES BASED ON
STARTING RE OF STARTING RB
S1905

END

**FIG. 19**

START

IDENTIFY USE-RESTRICTED SEQUENCE
S2001

MAP SEQUENCE SAMPLES BY
CONSIDERING USE-RESTRICTED SEQUENCE
S2003

END

**FIG. 20**

START

S2101

TRANSMIT SYSTEM INFORMATION

S2103

RECEIVE RACH PREAMBLE

S2105

TRANSMIT RANDOM ACCESS RESPONSE

END

**FIG. 21**

## INTERNATIONAL SEARCH REPORT

| International application No. |
| --- |
| **PCT/KR2023/011845** |

### A. CLASSIFICATION OF SUBJECT MATTER

**H04L 27/26**(2006.01)i; **H04W 74/00**(2009.01)i; **H04L 1/00**(2006.01)i; **H04L 1/08**(2006.01)i; **H04W 72/04**(2009.01)i; **H04W 88/02**(2009.01)i

According to International Patent Classification (IPC) or to both national classification and IPC

### B. FIELDS SEARCHED

Minimum documentation searched (classification system followed by classification symbols)

H04L 27/26(2006.01); H04W 72/04(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RedCap(Reduced Capability) UE, 대역폭(bandwidth), 시스템 정보(system information), RACH(random access channel)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021-197404 A1 (HUAWEI TECHNOLOGIES CO., LTD.) 07 October 2021 (2021-10-07)<br>See page 15, line 6 - page 24, line 20; and figures 4-5. | 1,12-16 |
| Y | | 2-4,7-11 |
| A | | 5-6 |
| Y | WO 2021-227009 A1 (APPLE INC.) 18 November 2021 (2021-11-18)<br>See claims 1-4. | 2-4 |
| Y | NOKIA et al. Evaluation Assumptions for Further Complexity Reduction. R1-2204039, 3GPP TSG RAN WG1 Meeting #109-e, e-Meeting. 29 April 2022.<br>See section 2; and figure 1. | 7-9 |
| Y | ERICSSON. Simulation needs and assumptions for further RedCap UE complexity reduction. R1-2203118, 3GPP TSG-RAN WG1 Meeting #109-e, e-Meeting. 29 April 2022.<br>See section 2.2. | 10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 November 2023** | **27 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011845** |

### C.    DOCUMENTS CONSIDERED TO BE RELEVANT

| Category* | Citation of document, with indication, where appropriate, of the relevant passages | Relevant to claim No. |
| --- | --- | --- |
| Y | WO 2021-172937 A1 (SAMSUNG ELECTRONICS CO., LTD.) 02 September 2021 (2021-09-02)<br>See claim 4. | 11 |

Form PCT/ISA/210 (second sheet) (July 2022)

**INTERNATIONAL SEARCH REPORT**
Information on patent family members

International application No.

**PCT/KR2023/011845**

| Patent document cited in search report | | | Publication date (day/month/year) | Patent family member(s) | | | Publication date (day/month/year) |
|---|---|---|---|---|---|---|---|
| WO | 2021-197404 | A1 | 07 October 2021 | CN | 113498213 | A | 12 October 2021 |
| | | | | CN | 116321507 | A | 23 June 2023 |
| | | | | EP | 4132195 | A1 | 08 February 2023 |
| | | | | JP | 2023-520545 | A | 17 May 2023 |
| | | | | KR | 10-2022-0162763 | A | 08 December 2022 |
| | | | | US | 2023-0034674 | A1 | 02 February 2023 |
| WO | 2021-227009 | A1 | 18 November 2021 | CN | 115606281 | A | 13 January 2023 |
| | | | | EP | 4151004 | A1 | 22 March 2023 |
| | | | | JP | 2023-525375 | A | 15 June 2023 |
| | | | | KR | 10-2022-0167316 | A | 20 December 2022 |
| | | | | US | 2023-0054292 | A1 | 23 February 2023 |
| WO | 2021-172937 | A1 | 02 September 2021 | CN | 115152310 | A | 04 October 2022 |
| | | | | EP | 4082289 | A1 | 02 November 2022 |
| | | | | US | 11659600 | B2 | 23 May 2023 |
| | | | | US | 2021-0274554 | A1 | 02 September 2021 |

Form PCT/ISA/210 (patent family annex) (July 2022)